## Europäisches Patentamt
## European Patent Office
## Office européen des brevets

(19)

(11) Publication number: **0 143 794**
**B1**

(12) # EUROPEAN PATENT SPECIFICATION

(45) Date of publication of patent specification: **07.12.88**

(51) Int. Cl.⁴: **F 04 D 9/06,** F 04 B 23/04, F 04 B 23/08

(21) Application number: **84901305.7**

(22) Date of filing: **05.03.84**

(86) International application number: **PCT/US84/00373**

(87) International publication number: **WO 84/04364 08.11.84 Gazette 84/26**

(54) **FUEL SYSTEM BUBBLE DISSIPATION DEVICE.**

(30) Priority: **25.04.83 US 488042**

(43) Date of publication of application: **12.06.85 Bulletin 85/24**

(45) Publication of the grant of the patent: **07.12.88 Bulletin 88/49**

(84) Designated Contracting States: **DE FR GB**

(56) References cited:
**GB-A-1 416 873**
**US-A-2 823 613**
**US-A-2 901 031**
**US-A-3 387 644**
**US-A-3 895 885**
**US-A-4 142 839**

(73) Proprietor: **SUNDSTRAND CORPORATION 4751 Harrison Avenue P.O. Box 7003 Rockford, Illinois 61125 (US)**

(72) Inventor: **ISEMAN, Walter, J. Route 1 Monroe Center, IL 61052 (US)**

(74) Representative: **Marshall, John Grahame SERJEANTS 25 The Crescent King Street Leicester LE1 6RX (GB)**

Courier Press, Leamington Spa, England.

## Description

Technical field

The present invention relates to a fuel system bubble dissipation device for removing air and vapor from a fuel line supplying fuel to an aircraft engine and, more particularly, to a structure having a bubble accumulation chamber of a size to hold the largest anticipated air bubble as well as fuel and an ejector which imcreases the pressure of fuel flowing from the bubble accumulation chamber and draws air and vapor stored in the bubble accumulation chamber for addition to the fuel flow at a controlled rate which will not cause pump loss of prime.

Background Art

It is common in fuel supply systems for aircraft engines to feed the fuel from a fuel tank with a boost pump mounted in the tank and the fuel flows to a fuel control with the pressure of the fuel being built up by a two-stage fuel pump having a centrifugal pump as a first stage and a gear pump as the second stage. For proper operation of the fuel system, it is important to avoid cavitation and/or loss of prime at the centrifugal pump which car occur if there are large air bubbles or excessive quantities of vapor in the fuel.

In a suction fuel system (no tank boost) for an aircraft engine, it is more probable to have air build up in the fuel line during low flow. On application of full power, this air may be transported as a large bubble which, if it reaches the centrifugal pump, will cause a loss of fuel flow to the engine. Previous systems have had various structural arrangements attempting to avoid this problem, such as the use of a centrifuge as shown in the Powell et al US Patent No. 2901031 and the use of a chamber located at the high point of a fuel line, as shown in Heinecke et al US Patent No. 3387644. In the Heinecke et al Patent, an eductor connected in parallel with the main fuel line is connected by a passage to the chamber at the high point in the fuel line to draw air therefrom and add it to fuel being returned to the main fuel line.

In a previous system described in Patent No. GB 1316873, fuel fed to a separator is divided into its liquid and gaseous components. At an advanced point in the flow path of the liquid through a rotary impeller type pump, the separated components are reintroduced, the gas being drawn into the liquid by a low pressure area created by a venturi or other suitable means.

The prior art does not disclose a system with minimal components, and therefore minimal weight, which stores a large air bubble in a bubble accumulation chamber and which utilizes the primary system ejector (jet pump) connected directly into the fuel line for drawing the air bubble out of the chamber at a controlled rate and mixing the air with the fuel flowing through the ejector.

This invention provides a bubble dissipation device for a fuel system and an aircraft fuel system incorporating such a bubble dissipation device.

The bubble dissipation device of the invention, designed to be positioned in a fuel line between a fuel tank and a fuel control, comprises an ejector with a casing one wall of which defines an elongate tubular flow passage which forms a portion of a fuel line so that all of the fuel flows through the tubular flow passage en route from the fuel tank to the fuel control. A nozzle is positioned entirely within the tubular flow passage and spaced from the wall to permit fuel flow past and around the nozzle. A nozzle inlet is connected to receive fuel under pressure continuously from a pump stage. A bubble dissipation chamber adjoins the ejector casing at a level above the ejector casing and is operatively connected to the fuel line in advance of the ejector casing. The bubble dissipation chamber is of a size to function as a fuel reservoir and to hold an air bubble above the level of fuel therein. It has an outlet adjacent its bottom or base, operatively connected to an inlet end of the tubular flow passage; and an inlet above the level of the outlet whereby fuel can flow through the bubble accumulation chamber from the inlet to the outlet with any bubbles in the fuel rising above the fuel level in the chamber. A bubble evacuation passage is formed in the bubble accumulation chamber having an inlet near the upper end of the accumulation chamber and an outlet through the wall of the ejector casing adjacent and radially outwardly of the nozzle outlet, and having a flow restriction therein to control the rate of withdrawal of air and vapor from the upper end of the bubble accumulation chamber for mixing the air and vapor at a controlled rate with the fuel flowing through the tubular flow passage of the ejector casing and past the nozzle.

Weight reduction is a prime consideration for any fuel supply system for an aircraft and has been considered in all prior proposed designs. However the bubble dissipation device of the invention provides a significant advance over the prior art in that the number of components and the overall weight are greatly reduced, in a device that operates on motive power extracted from a subsequent gear or centrifugal pump stage.

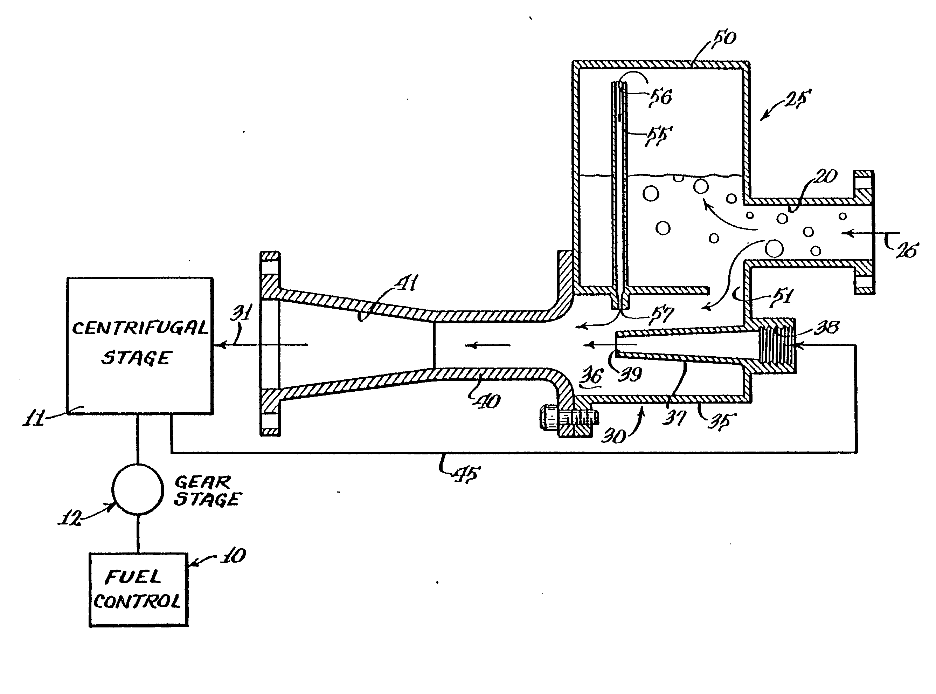

Brief Description of the Drawing

The Figure is a schematic view of the fuel system with certain portions of the fuel flow through a fuel line indicated by flow arrows and with parts of the structure shown in vertical section.

Best Mode for Carrying Out the Invention

The fuel system includes a fuel line which extends from a fuel tank (not shown) to a fuel control, indicated generally at 10. In advance of the fuel control, the fuel is pressurized to a desired level by a two-stage engine-driven pump having a first centrifugal stage, indicated generally at 11, as provided by a centrifugal pump and a second gear stage, indicated generally at 12, as provided by a gear pump.

The fuel is delivered through the fuel line from the fuel tank to an inlet 20 of a bubble accumulation chamber, indicated generally at 25, with this fuel line flow being indicated by the arrow 26. The fuel flows from the bubble accumulation chamber 25 to an ejector, indicated generally at 30, and flows from the ejector 30 to the centrifugal stage 11 through a part of the fuel line indicated by the flow arrow 31.

The ejector 30 has an ejector casing 35 defining a fuel flow passage 36. A nozzle 37 is located within the fuel flow passage and has an inlet 38 through a wall of the casing and ar outlet 39 within the fuel flow passage. The ejector 30 includes a cylindrical member 40 defining a mixing tube and which communicates with an outwardly-flared section 41 thereof. Fuel leaving the outwardly-flared portion 41 flows through the fuel line to the centrifugal stage 11 which has an inducer associated therewith.

The ejector 30 functions to pressurize the centrifugal stage inlet and to mix the fuel entering the fuel flow passage into a homogeneous bubbly froth. The impeller of the centrifugal pump provides a head rise to the fuel to meet the NPSP requirements of the gear stage.

The nozzle 37 is provided with fuel under pressure through a flow line 45 which is shown as extending from the centrifugal stage 11 to the inlet 38 of the nozzle. This source of pressurized fuel can alternatively be taken from some other location downstream of the centrifugal stage 11, such as the fuel control bypass or gear stage discharge.

If a large air bubble were to travel directly through the ejector and enter the centrifugal stage, the centrifugal stage could lose its prime with subsequent loss of fuel flow to the aircraft engine. When the aircraft engine is used in helicopter applications, the possibility for a large air bubble to occur in the fuel system is more likely. This air build-up can occur during low fuel flow and, upon application of full power to the engine requiring maximum fuel flow, this air may be transported as a large bubble into the fuel pump and, particularly, the centrifugal stage, causing it to lose prime. As an example of such an air bubble, if the fuel line has a three-quarter inch internal diameter and the air bubble in the line is twelve inches long, this represents a volume of in excess of five cubic inches.

In order to avoid loss of prime, the bubble accumulation chamber has been added to the system and is of a size to function as a fuel reservoir whereby fuel can continue to flow to the engine, even as a large air bubble enters the chamber and also to store a large air bubble above the level of fuel in the reservoir. This air is gradually drawn off by the ejector and mixed with the total fuel flow through the fuel line.

The bubble accumulation chamber 25 has a casing 50 with a vertical height and which can be of any desired shape, such as cylindrical. A passage means 51 connects the lower end of the chamber to the fuel flow passage 36 of the ejector. The inlet 20 to the bubble accumulation chamber is above the passage means 51 whereby, as an air bubble enters the bubble accumulation chamber, it will rise to the upper end thereof.

Passage means and, more particularly, a bubble evacuation passage extends between the upper end of the bubble accumulation chamber 25 and the fuel flow passage 36 of the ejector. More particularly, this passage means is defined by a tube 55 extending upwardly into the upper end of the bubble accumulation chamber and having an entry end 56 through which air and vapor can be drawn and a lower end 57 with a restriction opening into the fuel flow passage 36. The restriction is sized to provide a controlled rate of flow of air and vapor through the passage means whereby the air and vapor will be gradually drawn off from the upper end of the accumulation chamber.

With the construction and orientation of the bubble accumulation chamber 25 and the ejector 30, it will be seen that the aircraft embodying the structure can be at various attitudes, with there still being solid fuel flow through the inlet 20 to the ejector and collecting of air and vapor at the upper end of the bubble accumulation chamber 25.

The bubble dissipation device associates a bubble accumulation chamber with an ejector functioning in the main fuel line to avoid pump loss of prime problems arising from the existence of a large air bubble in the fuel.

## Claims

1. A bubble dissipation device for a fuel system wherein fuel is delivered through a fuel line from a fuel tank to a fuel control (10) with the pressure of the fuel being progressively increased by components including at least one pump stage (11) and an ejector (30) in advance of the pump stage, said ejector having an ejector casing (35) with a wall defining an elongate tubular flow passage (36) which forms a portion of said fuel line to have all of the fuel flow through said tubular flow passage in flowing from the fuel tank to the fuel control, a nozzle (37) positioned entirely within the tubular flow passage and spaced from said wall to permit fuel flow past and around the nozzle, said nozzle having an inlet (38) and an outlet (39) with said inlet connected to said pump stage to receive fuel under pressure continuously from the pump stage, a bubble accumulation chamber (25) adjoining and at a level above said ejector casing and operatively connected to said fuel line in advance of said ejector casing, said bubble accumulation chamber being of a size to function as a fuel reservoir and hold an air bubble above the level of fuel therein and having an outlet (51) adjacent the bottom thereof operatively connected to said tubular flow passage in said ejector casing at an inlet end thereof, a bubble accumulation chamber inlet (20) above the level of said bubble accumulation chamber outlet whereby fuel can flow through the bubble accumulation chamber from the inlet (20) to the outlet (51) thereof with any bubbles in the fuel rising above the fuel level in the bubble accumulation chamber, and a bubble evacuation passage (55) having an inlet (56) near the upper end of the bubble accumulation chamber and an outlet (57) through said wall of the ejector casing adjacent and radially outward of the nozzle outlet (39) and having a flow restriction therein to control the rate of withdrawal of air and vapor from said upper end of the bubble accumulation chamber for mixing the air and vapor at a controlled rate with the fuel flowing through the tubular flow passage of the ejector casing and past the nozzle.

2. A fuel system for delivering fuel from a fuel tank to a fuel control (10) for an aircraft engine incorporating a bubble dissipation device according to claim 1.

**Patentansprüche**

1. Blasenverteilungsvorrichtung für ein Kraftstoffsystem, bei der der Kraftstoff unter fortschreitender Erhöhung des Kraftstoffdruckes von einem Kraftstofftank durch eine Kraftstoffleitung zu einer Kraftstoffregelung (10) befördert wird, wobei die zur Erhöhung des Druckes dienenden Teile mindestens eine Pumpenstufe (11) und einen der Pumpenstufe vorgeschalteten Ejektor (30) beinhalten, wobei der Ejektor ein Ejektorgehäuse (35) mit einer Wand, die einen langgestreckten rohrförmigen Strömungskanal (36) definiert, der Teil der genannten Kraftstoffleitung bildet und bewirkt, daß der gesamte vom Kraftstofftank zur Kraftstoffregelung strömende Kraftstoff durch den genannten rohrförmigen Strömungskanal fließt, eine Düse (37), die in ihrer Gänze innerhalb des rohrförmigen Strömungskanals und mit Abstand von der genannten Wand angeordnet ist, damit der Kraftstoff an der Düse vorbei und dieselbe umströmen kann, wobei die genannte Düse einen mit der genannten Pumpenstufe verbundenen Einlaß (38), der kontinuierlich druckbeaufschlagten Kraftstoff von der Pumpenstufe erhält, und einen Auslaß (39) aufweist, eine Blasensammelkammer (25), die sich auf einer höheren Ebene liegend an das genannte Ejektorgehäuse anschließt und mit der genannten, dem Ejektorgehäuse vorgeschalteten Kraftstoffleitung betriebsmäßig verbunden ist, wobei die Blasensammelkammer groß genug ist, um als Kraftstoffreservoir zu fungieren und oberhalb des Kraftstoffspiegels eine Luftblase aufzunehmen, und neben ihrem Boden einen Auslaß (51) aufweist, der betriebsmäßig mit einem Einlaßende des genannten rohrförmigen Strömungskanals im Ejektorgehäuse verbunden ist, einen Blasensammelkammereinlaß (20), der höher als der genannte Blasensammelkammerauslaß liegt, was ermöglicht, daß Kraftstoff durch die Blasensammelkammer vom Einlaß (20) zu deren Auslaß (51) strömen kann, wobei die im Kraftstoff befindlichen Blasen bis über den Kraftstoffspiegel in der Blasensammelkammer steigen können, und einen Blasenevakuierkanal (55) aufweist, der nahe dem oberen Ende der Blasensammelkammer einen Einlaß (56) und einen durch die Wand des Ejektorgehäuses führenden, neben dem Düsenauslaß (39) und von diesem radial außen, liegenden Auslaß (57) hat, der eine Strömungsdrosselung aufweist, die die aus dem oberen Ende der Blasensammelkammer abgezogene Luft- und Gasmenge regelt, damit eine geregelte Vermischung der Luft- und Gasmenge mit dem durch den rohrförmigen Strömungskanal des Ejektorgehäuses und an der Düse vorbei strömenden Kraftstoff stattfindet.

2. Kraftstoffsystem zur Förderung von Kraftstoff aus einem Kraftstofftank zu einer Kraftstoffregelung (10) für einen Flugzeugmotor mit einer Blasenverteilungsvorrichtung nach Anspruch 1.

**Revendications**

1. Dispositif de dissipation des bulles pour un circuit de carburant dans lequel un carburant est fourni, par l'intermédiaire d'une conduite de carburant, à partir d'un réservoir de carburant, à une commande (10) de carburant, la pression du carburant étant élevée progressivement par des éléments comprenant au moins un étage à pompe (11) et un éjecteur (30) en avant de l'étage à pompe, ledit éjecteur ayant un corps (35) d'éjecteur avec une paroi définissant un passage d'écoulement tubulaire allongé (36) qui forme une partie de ladite conduite de carburant par laquelle passe la totalité du carburant s'écoulant par ledit passage d'écoulement tubulaire du réservoir de carburant vers la commande de carburant, une buse (37) placée en totalité à l'intérieur du passage d'écoulement tubulaire et espacée de ladite paroi pour permettre un écoulement du carburant au-delà et autour de la buse, ladite buse ayant une entrée (38) et une sortie (39), ladite entrée étant raccordée audit étage à pompe afin de recevoir du carburant sous pression en continu de l'étage à pompe, et une chambre (25) d'accumulation de bulles contiguë audit corps d'éjecteur et à un niveau supérieur à celui-ci et raccordée fonctionnellement à ladite conduite de carburant en avant dudit corps d'éjecteur, ladite chambre d'accumulation de bulles étant d'une dimension telle qu'elle fonctionne à la manière d'un réservoir de carburant et maintient une bulle d'air au-dessus du niveau du carburant dans ce réservoir, et ayant une sortie (51) adjacente à son fond et raccordée fonctionnellement audit passage d'écoulement tubulaire dans ledit corps d'éjecteur à une extrémité d'entrée de celui-ci, une entrée (20) de la chambre d'accumulation de bulles au-dessus du niveau de ladite sortie de la chambre d'accumulation de bulles, par laquelle le carburant peut s'écouler à travers la chambre d'accumulation de bulles de son entrée (20) vers sa sortie (51), toutes bulles présentes dans le carburant s'élevant au-dessus du niveau du carburant dans la chambre d'accumulation de bulles, et un passage (55) d'évacuation des bulles ayant une entrée (56) voisine de l'extrémité supérieure de la chambre d'accumulation de bulles et une sortie (57) à travers ladite paroi du corps d'éjecteur, adjacente à la sortie (39) de la buse et radialement extérieure de celle-ci, et renfermant un étranglement d'écoulement pour limiter le débit de retrait d'air et de vapeur à partir de ladite extrémité supérieure de la chambre d'accumulation de bulles afin de mélanger l'air et la vapeur à un débit limité avec le carburant s'écoulant par le passage d'écoulement tubulaire du corps d'éjecteur et au-delà de la buse.

2. Circuit de carburant pour distribuer un carburant d'un réservoir de carburant à une commande (10) de carburant pour un moteur d'aéronef, comprenant un dispositif de dissipation de bulles selon la revendication 1.